(19) Europäisches Patentamt
European Patent Office
Office européen des brevets

(11) Veröffentlichungsnummer : **0 350 939 B1**

(12) **EUROPÄISCHE PATENTSCHRIFT**

(45) Veröffentlichungstag der Patentschrift :
**23.09.92 Patentblatt 92/39**

(51) Int. Cl.$^5$ : **G11B 7/09**, G11B 21/10

(21) Anmeldenummer : **89112884.5**

(22) Anmeldetag : **13.07.89**

(54) **Verfahren und Schaltungsanordnung zur Kompensation von Offset-Spannungen in einem Fokus- und/oder Spurregelkreis.**

Verbunden mit 89907726.7/0378650 (europäische Anmeldenummer/Veröffentlichungsnummer) durch Entscheidung vom 16.04.91.

(30) Priorität : **15.07.88 DE 3824039**

(43) Veröffentlichungstag der Anmeldung :
**17.01.90 Patentblatt 90/03**

(45) Bekanntmachung des Hinweises auf die Patenterteilung :
**23.09.92 Patentblatt 92/39**

(84) Benannte Vertragsstaaten :
**AT BE CH DE ES FR GB GR IT LI LU NL SE**

(56) Entgegenhaltungen :
**EP-A- 0 088 441**
**EP-A- 0 190 438**
**EP-A- 0 290 882**

(73) Patentinhaber : **Deutsche Thomson-Brandt GmbH**
**Hermann-Schwer-Strasse 3 Postfach 1307**
**W-7730 Villingen-Schwenningen (DE)**

(72) Erfinder : **Gleim, Günter**
**Oberer Sonnenbühl 22**
**W-7730 Villingen-Schwenningen 22 (DE)**

Jouve, 18, rue Saint-Denis, 75001 PARIS

EP 0 350 939 B1

## Beschreibung

Die Erfindung betrifft ein Verfahren zur Kompensation von Offset-Spannungen in einem Fokusregelkreis, mittels dem ein Lichtstrahl einer Lichtquelle auf einen Aufzeichnungsträger fokussiert wird, und/oder in einem Spurregelkreis, mittels dem der Lichtstrahl auf den Datenspuren des Aufzeichnungsträgers geführt wird, wobei der Lichtstrahl vom Aufzeichnungsträger auf einen Photodetektor mit mehreren Photodioden reflektiert wird, aus deren Ausgangsspannungen durch Differenzbildung das Fokusfehler- und/oder Spurfehlersignal erzeugt wird.

Bei Geräten zur Wiedergabe von Daten, die mittels einer optischen Abtastvorrichtung aus den Datenspuren eines Aufzeichnungsträgers lesbar sind, wird ein Lichtstrahl mittels eines Fokusregelkreises auf den Aufzeichnungsträger fokussiert und mittels eines Spurregelkreises auf den Datenspuren des Aufzeichnungsträgers geführt. Die optische Abtastvorrichtung derartiger Geräte wie z.B. CD-Spieler, magneto-optische Geräte zur Wiedergabe und Aufzeichnung, Aufzeichnungs- und Wiedergabegeräte von DRAW-Discs oder Videoplattenspieler ist mit einer Laserdiode, mehreren Linsen, einem Prismenstrahlteiler, einem Beugungsgitter und einem Photodetektor ausgestattet. Aufbau und Funktion einer optischen Abtastvorrichtung, eines sogenannten optical pick-ups, sind in electronic components & applications, Vol. 6, No. 4, 1984 auf Seite 209 - 215 beschrieben.

Der von der Laserdiode ausgesendete Lichtstrahl wird mittels Linsen auf die CD-Platte fokussiert und von dort auf einen Photodetektor reflektiert. Aus dem Ausgangssignal des Photodetektors werden die auf der CD-Platte gespeicherten Daten und der Istwert für den Fokus- und für den Spurregelkreis gewonnen. In der genannten Literaturstelle wird der Istwert für den Fokusregelkreis als focusing error bezeichnet, während für den Istwert des Spurregelkreises der Ausdruck radial tracking error gewählt ist.

Als Stellglied für den Fokusregelkreis dient eine Spule, über deren Magnetfeld eine Objektivlinse entlang der optische Achse bewegbar ist. Der Fokusregelkreis bewirkt nun durch Verschieben der Objektivlinse, daß der von der Laserdiode ausgesendete Lichtstrahl stets auf die CD-Platte fokussiert wird. Mittels des Spurregelkreises, der oft auch als Radialantrieb bezeichnet wird, ist die optische Abtastvorrichtung bezüglich der CD-Platte in radialer Richtung verschiebbar. Dadurch kann der Lichtstrahl auf den spiralförmigen Datenspuren der CD-Platte geführt werden.

Bei einigen Geräten ist der Radialantrieb aus einem sogenannten Grob- und einem sogenannten Feinantrieb aufgebaut. Der Grobantrieb ist beispielsweise als Spindel ausgeführt, mittels der die gesamte optische Abtastvorrichtung aus der Laserdiode, den Linsen, dem Prismenstrahlteiler, dem Beugungsgitter und dem Photodetektor radial verschiebbar ist. Mit dem Feinantrieb ist der Lichtstrahl in radialer Richtung z.B. um einen vorgebbaren kleinen Winkel kippbar, so daß der Lichtstrahl allein durch diese Kippbewegung ein kleines Stück entlang einem Radius der CD-Platte fahren kann.

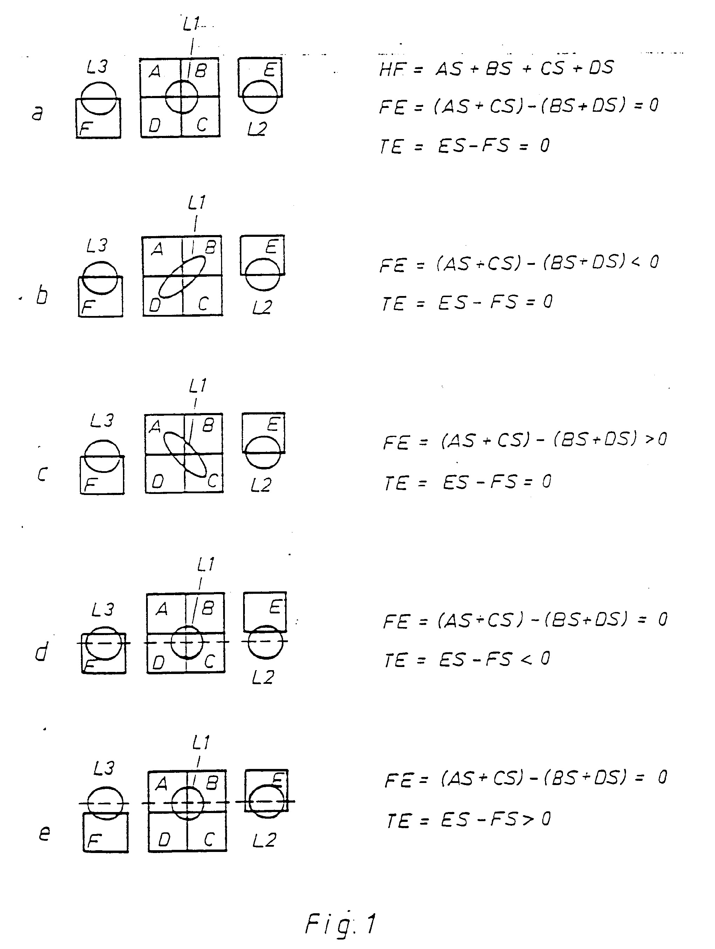

In der Figur 1 ist der Photodetektor PD der optischen Abtastvorrichtung eines CD-Spielers gezeigt, bei der drei Laserstrahlen L1, L2 und L3 auf die CD-Platte fokussiert werden. Eine derartige Abtastvorrichtung wird in der eingangs genannten Literaturstelle three-beam pick-up genannt.

Der mittlere Lichtstrahl L1 ist der Hauptstrahl, die beiden Lichtstrahlen L2 und L3 sind die Strahlen +1. und -1. Ordnung, die mittels eines Beugungsgitters aus dem Hauptstrahl L1 erzeugt werden.

Beim Photodetektor PD sind vier quadratförmige Photodioden A, B, C und D so zusammengefügt, daß sie wiederum ein Quadrat bilden. Bezüglich dieses aus den vier Photodioden A, B, C und D gebildeten Quadrates liegen sich zwei weitere ebenfalls quadratförmige Photodioden E und F diagonal gegenüber.

Der mittlere Lichtstrahl L1, der auf die vier Photodioden A, B, C und D fokussiert wird, erzeugt das Datensignal HF = AS + BS + CS + DS und das Fokusfehlersignal FE = (AS + CS) - (BS + DS). Die beiden äußeren Lichtstrahlen L2 und L3, von denen der vordere L2 auf die Photodiode E, der hintere L3 auf die Photodiode F fällt, erzeugen das Spurfehlersignal TE = ES - FS. Mit AS, BS, CS, DS, ES und FS sind jeweils die Photospannungen der Photodioden A, B, C, D, E und F bezeichnet. Weil in der optischen Abtastvorrichtung im Strahlengang des mittleren Lichtstrahls L1 eine astigmatisch wirkende Kollimatorlinse vorgesehen ist, ist der mittlere Lichtstrahl L1 bei genauer Fokussierung auf dem großen Quadrat, das aus den Photodioden A, B, C und D gebildet wird, kreisförmig, während er bei Defokussierung Ellipsenform annimmt.

Figur 1a zeigt den Fall der Fokussierung und der genauen Spurführung, auf die später noch eingegangen wird. Weil der vom Lichtstrahl L1 auf dem großen Quadrat gebildete Lichtfleck Kreisform hat, ergibt sich das Fokusfehlersignal zu FE = (AS + CS) - (BS + DS) = 0. Am Wert null des Fokusfehlersignals FE erkennt der Fokusregelkreis, daß genau fokussiert ist.

In Figur 1b ist nun der eine Fall der Defokussierung, daß die Objektivlinse zu weit von der CD-Platte entfernt ist, dargestellt. Das Fokusfehlersignal FE ist negativ: FE = (AS + CS) - (BS + DS) < 0. Am negativen Wert des Fokusfehlersignals FE erkennt der Fokusregelkreis, daß der Abstand zwischen der Objektivlinse und der CD-Platte zu groß ist. Deshalb wird die Objektivlinse vom Stellglied des Fokusregelkreises so weit auf die CD-Platte zu bewegt, bis das Fokusfehlersignal FE zu null wird.

Der andere Fall der Defokussierung, daß die Objektivlinse zu nahe an der CD-Platte liegt, ist in Figur 1c gezeigt. Das Fokusfehlersignal FE hat einen positiven Wert: FE = (AS + CS) - (BS + DS) > 0. Am positiven Wert des Fokusfehlersignals FE erkennt der Fokusregelkreis, daß die Objektivlinse zu nahe an der CD-Platte liegt. Die Objektivlinse wird daher vom Stellglied so weit von der CD-Platte wegbewegt, bis das Fokusfehlersignal FE zu null wird.

Es wird nun erläutert, wie die Spurführung mittels des Spurregelkreises erfolgt.

In den Figuren 1a, 1b und 1c folgen die Lichtstrahlen L1, L2 und L3 genau der Spur. Das Spurfehlersignal TE hat den Wert null. TE = ES - FS = 0.

In der Figur 1b ist der Fall dargestellt, daß die Lichtstrahlen L1, L2 und L3 nach rechts von der Spur verschoben sind. Das Spurfehlersignal TE nimmt einen negativen Wert an: TE = ES - FS < 0. Das Stellglied des Spurregelkreises bewegt die optische Abtastvorrichtung nun so weit nach links, bis das Spurfehlersignal TE zu null wird.

Im entgegengesetzten Fall, wenn die Lichtstrahlen nach links von der Spur verschoben sind, ist das Spurfehlersignal positiv: TE = ES - FS > 0. Nun bewegt das Stellglied des Spurregelkreises die optische Abtastvorrichtung so weit nach rechts, bis das Spurfehlersignal TE null wird.

Um eine einwandfreie Wiedergabe der Daten, seien es nun z.B. Bild und Ton bei einem Videoplattenspieler oder bloß der Ton bei einem CD-Spieler, zu erzielen, ist neben einer genauen Fokussierung des Lichtstrahls auf die Video- bzw. CD-Platte auch eine präzise Führung entlang den Datenspuren der Platte erforderlich.

Der Regelverstärker des Fokusregelkreises ist aber wie jeder andere Regelverstärker auch mit einer Offset-Spannung behaftet, deren Größe einerseits vom der Temperatur abhängt und andererseits einer langfristigen Drift unterliegt. Die Drift der Offset-Spannung und auch anderer Parameter eines Verstärkers im Laufe der Zeit werden durch Alterung des Verstärkers verursacht.

Das Fokusfehlersignal FE = (AS + BS) - (BS + DS) wird in einem Differenzverstärker gebildet. Weil auch dieser Differenzverstärker mit einer Offset-Spannung behaftet ist, und weil die Photodioden A, B, C und D bei gleicher Leuchtdichte im Gegensatz zu idealen Photodioden unterschiedliche Spannungen oder Ströme abgeben, liegt hier eine weitere Quelle störender Offset-Spannungen vor.

Damit die Datenwiedergabe nicht durch Offset-Spannungen gestört wird, ist eine Kompensation möglichst aller auftretenden Offset-Spannungen nötig. Durch Einstellen von Abgleichpotentiometern von Hand läßt sich eine Kompensation jedoch nur näherungsweise durchführen, weil Änderungen der Offset-Spannungen infolge Temperaturschwankungen und infolge Alterung einzelner Bauteile unberücksichtigt bleiben.

Um bei einem Fokusregelkreis, der aus der EP-A-0 190 438 bekannt ist, falsche Justierung oder auch Offsetspannungen, die durch Drift verursacht werden, zu kompensieren, wird der Fokusregelkreis zunächst geöffnet. Ein Mikroprozessor verändert nun so lange eine Kompensationsspannung am Eingang eines Servoverstärkers, an dessen Ausgang das Stellglied, der sogenannte Aktuator, angeschlossen ist, bis das Datensignal ein Maximum annimmt. Der Wert, den das Fokusfehlersignal bei maximalem Datensignal annimmt, wird gespeichert und nun bei geschlossenem Fokusregelkreis dem Eingang eines Mischers zugeführt. Dem anderen Eingang des Mischers wird das Fokusfehlersignal zugeführt. Der Ausgang des Mischers ist über den Servoverstärker mit dem Stellglied verbunden.

Es ist daher Aufgabe der Erfindung, ein Verfahren zur Kompensation von Offset-Spannungen in einem Fokus- und/oder Spurregelkreis so zu gestalten, daß eine automatische Kompensation der Offset-Spannungen ermöglicht wird.

Die Erfindung löst diese Aufgabe dadurch, daß bei geschlossenem Regelkreis das Fokusfehler- und/oder Spurfehlersignal mit einer vorgebbaren Referenzgröße verglichen wird und daß dem Stellglied des Fokus- und-/oder Spurregelkreises eine Kompensationsgröße zugeführt wird, die so lange verändert wird, bis das Fokusfehler- und/oder Spurfehlersignal mit der Referenzgröße übereinstimmt, und die bei übereinstimmung des Fokusfehler- und/oder Spurfehlersignals mit der Referenzgröße beibehalten wird.

Eine weitere Lösung dieser Aufgabe sieht, vor daß vor dem Vergleich des Fokusfehler- und/oder Spurfehlersignals in einem ersten Verfahrensschritt bei offenem oder ausgeschaltetem Regelkreis und bei gleichmäßiger Beleuchtung der Photodioden zum Fokusfehler- und/oder Spurfehlersignal eine erste Kompensationsgröße addiert und so lange verändert wird, bis die Summe mit einer ersten Referenzgröße übereinstimmt, daß bei übereinstimmung der Summe mit der ersten Referenzgröße die erste Kompensationsgröße beibehalten wird.

Eine weitere Lösung dieser Aufgabe liegt darin, daß vor dem Vergleich des Fokusfehler- und/oder Spurfehlersignals in einem ersten Verfahrensschritt bei offenem oder ausgeschaltetem Regelkreis und bei gleichmäßiger Beleuchtung der Photodioden das Fokus- und/oder Spurfehlersignal als Referenzgröße abgespeichert wird.

Es zeigen

Figur 2 eine Schaltungsanordnung zur Durchführung des Verfahrens nach Anspruch 1

Figur 3 eine Schaltungsanordnung zur Durchführung des Verfahrens nach Anspruch 3
Figur 4 eine Schaltungsanordnung zur Durchführung des Verfahrens nach Anspruch 4
Figur 5 eine Schaltungsanordnung zur Durchführung des Verfahrens nach Anspruch 5.

Anhand der in den Figuren abgebildeten Schaltungsanordnungen werden nun die einzelnen erfindungsgemäßen Verfahren am Beispiel eines Fokusregelkreises erläutert.

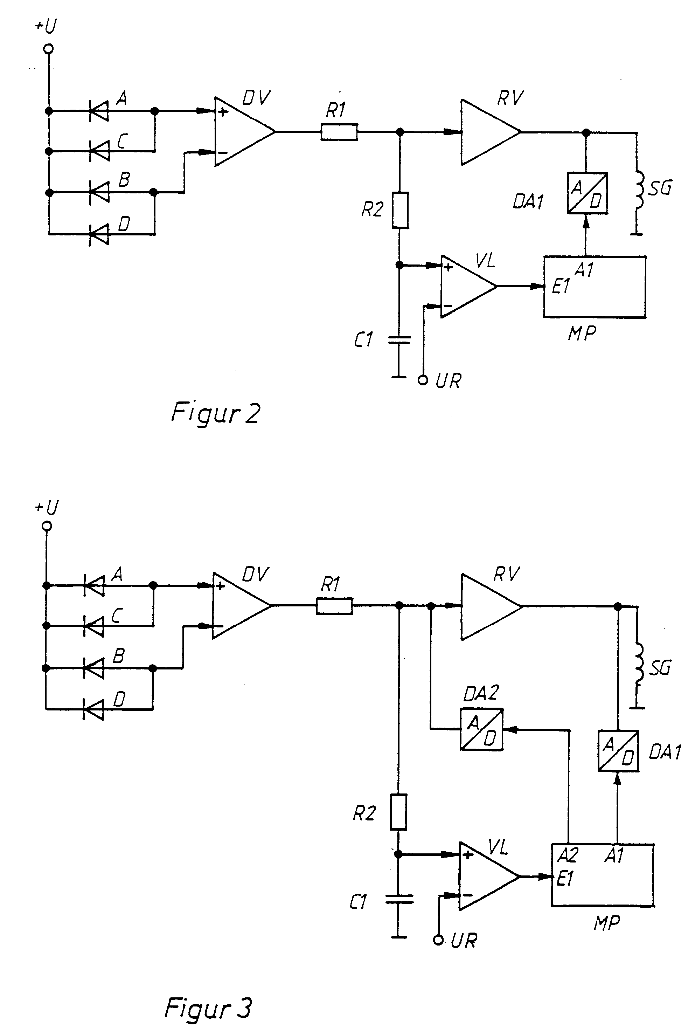

In der Figur 2 liegt an den miteinander verbundenen Kathoden der Photodioden A, B, C und D eine Spannung +U. Die miteinander verbundenen Anoden der Photodioden A und C sind an den Additionseingang, die miteinander verbundenen Anoden der Photodioden B und D dagegen an den Subtraktionseingang eines Differenzverstärkers DV angeschlossen, dessen Ausgang über einen Widerstand R1 mit dem Eingang eines Regelverstärkers RV und über einen weiteren Widerstand R2 mit dem nichtinvertierenden Eingang eines Vergleichers VL verbunden ist. Der nichtinvertierende Eingang des Vergleichers VL liegt über eine Kapazität C1 auf Bezugspotential. Am invertierenden Eingang des Vergleichers VL, dessen Ausgang mit dem Eingang E1 eines Mikroprozessors MP verbunden ist, liegt eine Referenzspannung UR. Der Ausgang A1 des Mikroprozessors MP ist mit dem Eingang eines Digital-Analog-Wandlers DA1 verbunden, dessen Ausgang mit dem Ausgang des Regelverstärkers RV und dem einen Anschluß des Stellgliedes SG verbunden ist. Der andere Anschluß des Stellgliedes SG, das als Spule ausgeführt ist, liegt auf Bezugspotential.

Zum leichteren Verständnis der Schaltungsanordnung sei zunächst angenommen, daß der Fokusregelkreis aus idealen Bauteilen aufgebaut ist, die mit keinerlei Offset-Spannungen behaftet sind.

Bei genauer Fokussierung bildet sich der Hauptstrahl L1 als Kreis auf den vier Photodioden A, B, C und D ab, wie in Figur 1a gezeigt ist. Weil deshalb alle vier Photodioden A, B, C und D die gleiche Lichtenergie empfangen und in einen elektrischen Strom umwandeln, geben sie gleiche Ausgangsspannungen oder -ströme ab. Daher ist die Spannung am Ausgang des Differenzverstärkers DV null. Weil der Regelverstärker RV ebenfalls als ideal angenommen wird, ist die Spannung an seinem Ausgang und damit auch am einen Anschluß des Stellgliedes SG ebenfalls null. Das Stellglied SG, häufig auch Aktuator genannt, bewegt deshalb das Objektiv der optischen Abtastvorrichtung so lange, bis die Spannung am Ausgang des Regelverstärkers RV null wird. Unter der Voraussetzung idealer Bauteile ist dann genau fokussiert, weil die Spannung am Ausgang des Differenzverstärkers DV ebenfalls null beträgt.

Es wird nun angenommen, daß der Regelverstärker RV mit einer Offset-Spannung behaftet ist, während der Differenzverstärker DV und die Photodioden A, B, C und D weiterhin als ideal gelten sollen.

Wiederum wird das Stellglied SG das Objektiv so lange bewegen, bis die Spannung am Ausgang des Regelverstärkers RV null wird. Bei dem nun als real angenommenen Regelverstärker RV ist dann aber die Eingangsspannung und somit auch die Spannung am Ausgang des Differenzverstärkers von null verschieden. In der Lage, in welcher das Objektiv nun von der Spule gehalten wird, wird deshalb der Lichtstrahl L1 nicht mehr kreis-, sondern wie in Figur 1b oder 1c leicht ellipsenförmig abgebildet, was anzeigt, daß nicht genau fokussiert ist.

Um durch Kompensation der Offset-Spannung des Regelverstärkers RV eine genaue Fokussierung zu erzielen, wird die Spannung am Ausgang des Differenzverstärkers DV im Vergleicher VL mit einer Referenzspannung UR verglichen, die beim angegebenen Ausführungsbeispiel zu null gewählt ist. Der Mikroprozessor MP verändert nun so lange die digitalen Werte an seinem Ausgang A1, die der Digital-Analog-Wandler DA1 in eine analoge Spannung wandelt und dem Stellglied SG zuführt, bis der Vergleicher VL am Eingang E1 des Mikroprozessors MP anzeigt, daß die Spannung am Ausgang des Differenzverstärkers DV null geworden ist. Weil nun der Lichtstrahl L1 vom Objektiv kreisförmig auf den Photodioden A, B, C und D abgebildet wird, ist genau fokussiert. Zeigt der Vergleicher VL dem Mikroprozessor MP, daß genau fokussiert ist, weil die Spannung am Ausgang des Differenzverstärkers DV null geworden ist, behält der Mikroprozessor MP den Wert an seinem Ausgang A1 bei, so daß ständig wegen des Digital-Analog-Wandlers DA1 eine analoge Kompensationsspannung am Stellglied SG anliegt.

Das Gerät, z.B. ein CD-Spieler, ist jetzt spielbereit. Besonders vorteilhaft ist es , die Kompensation jedesmal beim Einschalten des CD-Spielers vorzunehmen.

Ändert sich nun die Offset-Spannung des Regelverstärkers RV z.B. infolge Alterung oder Temperaturschwankungen, so hat dies zur Folge, daß sich die Spannung am Ausgang des Differenzverstärkers DV ebenfalls ändert und nicht mehr mit der Referenzspannung UR übereinstimmt. Weil der Vergleicher VL dies dem Mikroprozessor MP beim Einschalten des CD-Spielers anzeigt, ist der Mikroprozessor in der Lage, die Offset-Kompensationsspannung nachzuregeln und damit für eine optimale Kompensation zu sorgen.

Ein wesentlicher Vorteil der in Figur 2 dargestellten Schaltungsanordnung ist darin zu sehen, daß jedesmal beim Einschalten des CD-Spielers automatisch die Kompensation der Offset-Spannung des Regelverstärkers RV erfolgt.

Es wird nun die in Figur 3 gezeigte Schaltungsanordnung zur Durchführung des Verfahrens gemäß Anspruch 2 beschrieben und anschließend erläutert.

Die Schaltungsanordnung aus Figur 3 unterscheidet sich von der Schaltungsanordnung aus Figur 2 dadurch, daß sie durch einen Digital-Analog-Wandler DA2 ergänzt ist, dessen Ausgang mit dem Ausgang des Differenzverstärkers DV und dessen Eingang mit einem Ausgang A2 des Mikroprozessors MP verbunden ist.

Bei der Schaltungsanordnung in Figur 3 wird angenommen, daß neben dem Regelverstärker RV auch der Differenzverstärker DV mit einer Offset-Spannung behaftet ist. Die Photodioden A, B, C und D werden ebenfalls als reale, d.h. nicht vollkommen gleiche Bauteile betrachtet, die bei gleicher Beleuchtung unterschiedliche Spannungen oder Ströme abgeben. Deshalb wird im Falle der Fokussierung, wenn das Objektiv den Lichtstrahl L1 kreisförmig wie in Figur 1a auf die vier Photodioden A, B, C und D abbildet, die Spannung am Ausgang des Differenzverstärkers DV nicht wie gewünscht den Wert null, sondern einen positiven oder negativen Wert, z.B. +a annehmen.

In einem ersten Verfahrensschritt werden bei offenem oder ausgeschaltetem Fokusregelkreis die vier Photodioden A, B, C und D gleichmäßig beleuchtet. Dieser Zustand läßt sich auf einfache Weise durch Ausschalten der Lichtquelle erreichen, denn dann liegen die Photodioden A, B, C und D im Dunkeln. Bei ausgeschalteter Lichtquelle spielt es außerdem keine Rolle, wo das Objektiv steht und ob es sich bewegt, weil keine Rückkopplung erfolgen kann.

In diesem Zustand - bei ausgeschalteter Lichtquelle - wird die Spannung am Ausgang des Differenzverstärkers DV mit der Referenzspannung UR im Vergleicher VL verglichen.

Die digitalen Werte, die der Mikroprozessor MP an seinem Ausgang A2 nun abgibt, werden vom Digital-Analog-Wandler DA2 in eine analoge Spannung umgesetzt. Der Mikroprozessor MP ändert nun so lange die digitalen Werte an seinem Ausgang A2, bis der Vergleicher VL anzeigt, daß die analoge Spannung am Ausgang des Digital-Analog-Wandlers DA2 die Spannung am Ausgang des Differenzverstärkers DV kompensiert hat. Der zu diesem Zeitpunkt am Ausgang A2 des Mikroprozessors MP liegende digitale Wert wird beibehalten. Durch diese Maßnahme wird erreicht, daß die Spannung am Eingang des Regelverstärkers RV null ist, wenn bei genauer Fokussierung der Lichtstrahl L1 wie in Figur 1a kreisförmig auf die Photodioden A, B, C und D abgebildet wird.

In einem zweiten Verfahrensschritt wird die Lichtquelle eingeschaltet und wie bei der Schaltungsanordnung in Figur 2 vorgegangen.

Leider hat eine weitere bisher vernachlässigte Offsetgröße, die häufig als optischer Offset bezeichnet wird, ihre Ursache in der Optik der optischen Abtastvorrichtung. Darunter wird folgendes verstanden: Wenn der Lichtstrahl genau auf den Aufzeichnungsträger fokussiert ist, wird infolge der nie zu vermeidenden optischen Fehler der optischen Bauteile - der Linsen, des Prismenstrahlteilers und des Beugungsgitters - der Lichtstrahl nicht, wie es bei idealen vollkommen fehlerfreien optischen Bauteilen der Fall wäre, kreisförmig, sondern leicht ellipsenförmig auf den Photodetektor mit den vier Photodioden A, B, C und D abgebildet. Bei genauer Fokussierung des Lichtstrahls auf den Aufzeichnungsträger ist daher nicht wie gewünscht die Spannung am Ausgang des Differenzverstärkers DV trotz Kompensation seiner Offset-Spannung null. Vielmehr hat sie einen positiven oder negativen Wert.

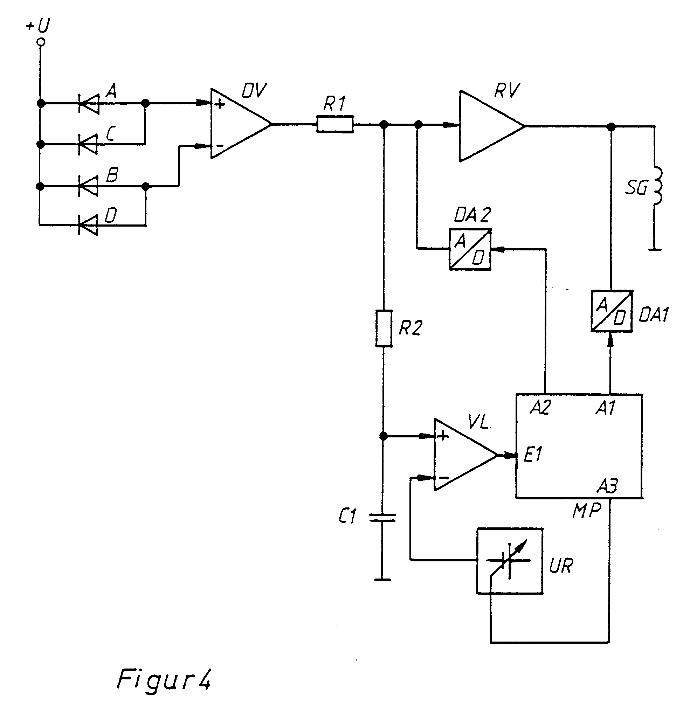

Wie auch diese Offset-Spannung, die vom optischen Offset verursacht wird, kompensiert werden kann, wird anhand der in Figur 4 gezeigten Schaltungsanordnung erläutert.

Sie unterscheidet sich von der Schaltungsanordnung aus Figur 3 dadurch, daß die Referenzspannung UR veränderbar ist. Zu diesem Zweck ist ein Ausgang A3 des Mikroprozessors MP mit dem Steuereingang der Referenzspannungsquelle UR verbunden, die z.B. als Digital-Analog-Wandler ausgeführt sein kann.

Im ersten und zweiten Verfahrensschritt, die wie bei der Schaltungsanordnung aus der Figur 3 ablaufen, ist für die Referenzspannung UR ein fester Wert gewählt. Zusätzlich zum ersten und zweiten Verfahrensschritt wird bei der Produktion des CD-Spielers noch ein dritter Verfahrensschritt zur Kompensation des erwähnten optischen Offsets durchgeführt, der folgendermaßen abläuft.

In den CD-Spieler wird eine CD-Testplatte eingelegt. Die im ersten und zweiten Verfahrensschritt ermittelten digitalen Werte an den Ausgängen A1 und A2 des Mikroprozessors MP werden während des dritten Verfahrensschritts beibehalten und nicht verändert. Es wird nun bei eingeschalteter Lichtquelle der Lichtstrahl genau auf den Aufzeichnungsträger, die CD-Testplatte, fokussiert. Die genaue Fokussierung wird mit Hilfe der CD-Testplatte ermittelt, denn bei genauer Fokussierung ist der Jitter im HF-Signal am geringsten. Die genaue Fokussierung kann jedoch auch beispielsweise mittels eines Mikroskops überprüft werden. Es wird nun festgestellt, um welchen Wert die Referenzspannung UR zu ändern ist, damit auch der optische Offset kompensiert wird, denn die Offset-Spannung des Differenzverstärkers DV wurde bereits im ersten und die des Regelverstärkers RV bereits im zweiten Verfahrensschritt kompensiert. Die Referenzspannung UR wird daher solange verändert, bis der Jitter im HF-Signal ein Minimum annimmt, weil dann der Lichtstrahl genau auf die eingelegte Testplatte fokussiert ist. Der auf diese Weise gefundene Wert der Referenzspannung UR wird fest eingestellt. Der CD-Spieler ist nun betriebsbereit.

Wenn sich die Offset-Spannung des Differenzverstärkers DV oder des Regelverstärkers RV im späteren Spielbetrieb ändern, werden sie z.B. jedesmal beim Einschalten des Gerätes gemäß dem ersten und dem zweiten Verfahrensschritt kompensiert.

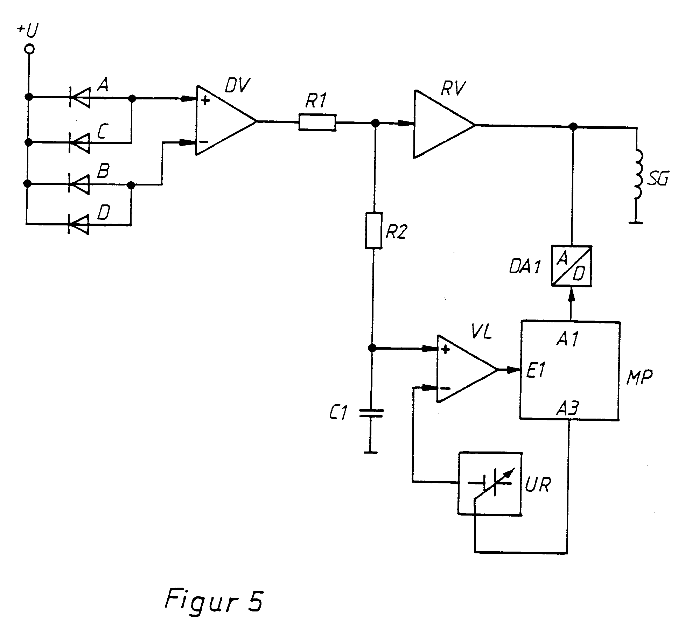

Es wird nun die in Figur 5 gezeigte Schaltungsanordnung zur Durchführung des Verfahrens gemäß Anspruch 5 beschrieben und erläutert.

Sie unterscheidet sich von der Schaltungsanordnung aus Figur 4 dadurch, daß der Digital-Analog-Wandler DA2 fehlt.

In einem ersten Verfahrensschritt wird wie bei der Schaltungsanordnung aus der Figur 3 für eine gleichmäßige Beleuchtung der Photodioden A, B, C und D gesorgt, indem die Lichtquelle ausgeschaltet wird. In diesem Zustand, der dem der genauen Fokussierung entspricht, wenn der Lichtstrahl L1 kreisförmig auf die Photodioden A, B, C und D abgebildet wird, ändert der Mikroprozessor MP so lange die Referenzspannung UR, bis ihm der Vergleicher VL1 anzeigt, daß die Referenzspannung UR mit der Spannung am Ausgang des Differenzverstärkers DV, die z.B. +a betragen möge, übereinstimmt.

Um auch den bereits erwähnten optischen Offset zu kompensieren, wird der erste Verfahrensschritt ähnlich wie bei der Schaltungsanordnung aus Figur 3 geändert. Bei offenem oder ausgeschaltetem Fokusregelkreis wird bei der Produktion des CD-Spielers der Lichtstrahl genau auf die CD-Platte fokussiert und die genaue Fokussierung mit Hilfe eines Mikroskops oder durch Ermitteln des Jitterminimums im HF-Signal mittels der CD-Testplatte überprüft. Nun ändert der Mikroprozessor MP so lange die Referenzspannung UR, bis ihm der Vergleicher VL1 anzeigt, daß die Referenzspannung UR mit der Spannung am Ausgang des Differenzverstärkers DV, die z.B. +b betragen möge, übereinstimmt.

Der zweite Verfahrensschritt läuft wie bei den zuvor beschriebenen Schaltungsanordnungen bei eingeschalteter Lichtquelle ab.

Ohne weitere Kompensationsmaßnahmen würde das Stellglied SG das Objektiv in einer Lage festhalten, bei der die Spannung am Ausgang des Regelverstärkers RV null wird. Die Spannung am Eingang des Regelverstärkers RV wird aber in der Regel in diesem Fall nicht wunschgemäß +a bzw. +b betragen, wie es bei genauer Fokussierung der Fall wäre, sondern einen von null verschiedenen positiven oder negativen Wert je nach Größe der Offset-Spannung des Regelverstärkers RV annehmen. Es ist deshalb vorgesehen, daß der Mikroprozessor MP den digitalen Wert an seinem Ausgang A1, der vom Digital-Analog-Wandler DA1 in eine analoge dem Stellglied SG zugeführte Kompensationsspannung umgewandelt wird, so lange ändert, bis ihm der Vergleicher VL anzeigt, daß die Spannung am Ausgang des Differenzverstärkers DV mit der Referenzspannung UR übereinstimmt, die bei dem angenommenen Zahlenbeispiel den Wert +a bzw. +b hat. Der dann am Ausgang A1 des Mikroprozessors MP liegende digitale Wert wird beibehalten, so daß wegen des Digital-Analog-Wandlers DA1 ständig die richtige analoge Kompensationsspannung am Stellglied SG anliegt. Der CD-Spieler ist jetzt spielbereit.

Besonders vorteilhaft bei dieser Schaltungsanordnung ist es, jedesmal beim Einschalten des CD-Spielers die beiden beschriebenen Verfahrensschritte durchzuführen.

Eine Kompensation von Hand durch Abgleich eines Potentiometers bei der Produktion entfällt ebenso wie ein später wegen Temperaturschwankungen oder Alterung der Bauteile notwendiger Neuabgleich, denn jedesmal beim Einschalten des Gerätes werden die Offset-Spannungen automatisch kompensiert.

**Patentansprüche**

1. Verfahren zur Kompensation von Offset-Spannungen in einem Fokusregelkreis, mittels dem ein Lichtstrahl einer Lichtquelle auf einen Aufzeichnungsträger fokussiert wird, und/oder in einem Spurregelkreis, mittels dem der Lichtstrahl auf den Datenspuren des Aufzeichnungsträgers geführt wird, wobei der Lichtstrahl vom Aufzeichnungsträger auf einen Photodetektor mit mehreren Photodioden (A, B, C, D, E, F) reflektiert wird, aus deren Ausgangsspannungen durch Differenzbildung das Fokusfehler- und/oder Spurfehlersignal erzeugt werden, **dadurch gekennzeichnet**, daß bei geschlossenem Regelkreis das Fokusfehler- und/oder Spurfehlersignal mit einer vorgebbaren Referenzgröße (UR) verglichen wird und daß dem Stellglied (SG) des Fokus- und/oder Spurregelkreises eine Kompensationsgröße zugeführt wird, die so lange verändert wird, bis das Fokusfehler- und/oder Spurfehlersignal mit der Referenzgröße (UR) übereinstimmt, und die bei übereinstimmung des Fokusfehler- und/oder Spurfehlersignals mit der Referenzgröße (UR) beibehalten wird.

2. Verfahren nach Anspruch 1 **dadurch gekennzeichnet,** daß vor dem Vergleich des Fokusfehler - und/oder Spurfehlersignals in einem ersten Verfahrensschritt bei offenem oder ausgeschaltetem Regelkreis und bei gleichmäßiger Beleuchtung der Photodioden (A, B, C, D und/oder E, F) zum Fokusfehler- und/oder Spurfehlersignal eine erste Kompensationsgröße addiert und so lange verändert wird, bis die Summe mit einer ersten Referenzgröße übereinstimmt, daß bei übereinstimmung der Summe mit der ersten Referenzgröße (UR) die erste Kompensationsgröße beibehalten wird.

3. Verfahren nach Anspruch 2, **dadurch gekennzeichnet,** daß die erste und zweite Referenzgröße gleich groß gewählt sind.

4. Verfahren nach Anspruch 2 oder 3, **dadurch gekennzeichnet,** daß sich bei der Produktion des Fokus- und/oder Spurregelkreises ein dritter Verfahrensschritt an den ersten und zweiten Verfahrensschritt anschließt, daß im dritten Verfahrensschritt die im ersten Verfahrensschritt ermittelte erste Kompensationsgröße und die im zweiten Verfahrensschritt ermittelte zweite Kompensationsgröße beibehalten werden, daß der Lichtstrahl mittels eines Meßgerätes genau auf den Aufzeichnungsträger fokussiert wird und daß anschließend die Referenzgröße korrigiert wird.

5. Verfahren nach Anspruch 1 **dadurch gekennzeichnet,** daß vor dem Vergleich des Fokusfehler- und/oder Spurfehlersignals in einem ersten Verfahrensschritt bei offenem oder ausgeschaltetem Regelkreis und bei gleichmäßiger Beleuchtung der Photodioden das Fokus- und/oder Spurfehlersignal als Referenzgröße abgespeichert wird,

6. Verfahren nach Anspruch 5, **dadurch gekennzeichnet,** daß bei der Produktion des Regelkreises im ersten Verfahrensschritt der Lichtstrahl genau auf den Aufzeichnungsträger fokussiert wird und die genaue Fokussierung mittels eines Meßgerätes überprüft wird.

7. Verfahren nach Anspruch 4 oder 6, **dadurch gekennzeichnet,** daß als Meßgerät zur Überprüfung der genauen Fokussierung ein Mikroskop vorgesehen ist.

8. Verfahren nach Anspruch 4 oder 6, **dadurch gekennzeichnet,** daß zur Überprüfung der genauen Fokussierung des Lichtstrahls auf dem Aufzeichnungsträger mittels eines Testaufzeichnungsträgers das Jitterminimum im HF-Signal ermittelt wird.

9. Verfahren nach Anspruch 2, 3, 4 oder 5, **dadurch gekennzeichnet,** daß zur Erzielung einer gleichmäßigen Beleuchtung der Photodioden (A, B, C, D und/oder E, F) die Leuchtdichte zu null gewählt ist.

10. Verfahren nach Anspruch 9, **dadurch gekennzeichnet,** daß die Photodioden (A, B, C, D und/oder E, F) mittels einer Blende von der Lichtquelle abgeschirmt werden.

11. Verfahren nach Anspruch 9, **dadurch gekennzeichnet,** daß die Lichtquelle ausgeschaltet wird.

12. Schaltungsanordnung zur Durchführung des Verfahrens nach Anspruch 1, **dadurch gekennzeichnet,** daß an den miteinander verbundenen Kathoden der Photodioden (A, B, C, D) des Photodetektors eine Spannung +U liegt, daß die Anoden je zweier Photodioden (A und C, B und D) miteinander und mit je einem Eingang eines Differenzverstärkers (DV) verbunden sind, dessen Ausgang mit dem Eingang eines Regelverstärkers (RV) und mit dem einen Eingang eines Vergleichers (VL) verbunden ist, daß am anderen Eingang des Vergleichers (VL) eine Referenzspannung (UR) liegt, daß der Ausgang des Vergleichers (VL) mit dem Eingang (E1) eines Mikroprozessors (MP) verbunden ist, dessen Ausgang (A1) mit dem Eingang eines Digital-Analog-Wandlers (DA1) verbunden ist, daß der Ausgang des Regelverstärkers (RV) mit dem Ausgang des Digital-Analog-Wandlers (DA1) und mit dem Stellglied (SG) verbunden ist, daß der Mikroprozessor (MP) dem Stellglied (SG) des Fokus- und/oder Spurregelkreises eine Kompensationsgröße zuführt, die er so lange verändert, bis das Fokusfehler- und/oder Spurfehlersignal mit der Referenzgröße (UR) übereinstimmt, und die er bei übereinstimmung des Fokusfehler- und/oder Spurfehlersignals mit der Referenzgröße (UR) beibehält.

13. Schaltungsanordnung zur Durchführung des Verfahrens nach Anspruch 2, **dadurch gekennzeichnet,** daß an den miteinander verbundenen Kathoden der Photodioden (A, B, C, D) des Photodetektors eine Spannung +U liegt, daß die Anoden je zweier Photodioden (A und C, B und D) miteinander und mit je einem Eingang eines Differenzverstärkers (DV) verbunden sind, dessen Ausgang mit dem Eingang eines Regelverstärkers (RV) und mit dem einen Eingang eines Vergleichers (VL) verbunden ist, daß am anderen Eingang des Vergleichers (VL) eine Referenzspannung (UR) liegt, daß der Ausgang des Vergleichers (VL) mit dem Eingang (E1) eines Mikroprozessors (MP) verbunden ist, dessen erster Ausgang (A1) mit dem Eingang eines ersten Digital-Analog-Wandlers (DA1) und dessen zweiter Ausgang (A2) mit dem Eingang eines zweiten Digital-Analog-Wandlers (DA2) verbunden ist, daß der Ausgang des Regelverstärkers (RV) mit dem Ausgang des ersten Digital-Analog-Wandlers (DA1) und mit dem Stellglied (SG) verbunden ist, daß der Ausgang des zweiten Digital-Analog-Wandlers (DA2) mit dem Eingang des Regelverstärkers (RV) verbunden ist, daß der Mikroprozessor (MP) zum Fokusfehler- und/oder Spurfehlersignal eine erste Kompensationsgröße addiert und so lange verändert, bis die Summe mit einer ersten Referenzgröße übereinstimmt, daß bei übereinstimmung der Summe mit der ersten Referenzgröße (UR) der Mikroprozessor (MP) die erste Kompensationsgröße beibehält, daß der Mikroprozessor (MP) eine zweite Kompensationsgröße dem Stellglied (SG) des Fokus- und/oder Spurregelkreises zuführt und so lange verändert, bis das Fokus- und/oder Spurfehlersignal mit der zweiten Referenzgröße (UR)-übereinstimmt, und daß er die zweite Kompensationsgröße bei übereinstimmung des Fokusfehler- und/oder Spurfehlersignals mit der Referenzgröße (UR) beibehält.

14. Schaltungsanordnung zur Durchführung des Verfahrens nach Anspruch 4 und 13, **dadurch gekennzeichnet,** daß der andere Eingang des Vergleichers (VL) mit einer steuerbaren Referenzspannungsquelle (UR) verbunden ist, deren Steuereingang mit einem dritten Ausgang (A3) des Mikroprozessors (MP) verbunden ist.

15. Schaltungsanordnung zur Durchführung des Verfahrens nach Anspruch 5, **dadurch gekennzeichnet,** daß an den miteinander verbundenen Kathoden der Photodioden (A, B, C, D) des Photodetektors eine Spannung +U liegt, daß die Anoden je zweier Photodioden (A und C, B und D) miteinander und mit je einem Eingang eines Differenzverstärkers (DV) verbunden sind, dessen Ausgang mit dem Eingang eines Regelverstärkers (RV) und mit dem Eingang eines Vergleichers (VL) verbunden ist, daß der andere Eingang des Vergleichers (VL) mit einer steuerbaren Referenzspannungsquelle (UR) verbunden ist, daß der Ausgang des Vergleichers (VL) mit dem Eingang (E1) eines Mikroprozessors (MP) verbunden ist, dessen erster Ausgang (A1) mit dem Eingang eines Digital-Analog-Wandlers (DA1) und dessen zweiter Ausgang (A3) mit dem Steuereingang der veränderbaren Referenzspannungsquelle (UR) verbunden ist, daß der Ausgang des Regelverstärkers (RV) mit dem Ausgang des Digital-Analog-Wandlers (DA1) und mit dem Stellglied (SG) verbunden ist, daß der Mikroprozessor (MP) dem Stellglied (SG) des Regelkreises eine Kompensationsgröße zuführt und so lange verändert, bis das Fokus- und/oder Spurfehlersignal mit der gespeicherten Referenzgröße übereinstimmt, und daß der Mikroprozessor (MP) die Kompensationsgröße bei übereinstimmung des Fokus- und/oder Spurfehlersignals mit der gespeicherten Referenzgröße beibehält.

16. Schaltungsanordnung nach Anspruch 14 oder 15, **dadurch gekennzeichnet,** daß die steuerbare Referenzspannungsquelle (UR) als Digital-Analog-Wandler ausgeführt ist.

17. Schaltungsanordnung nach Anspruch 12, 13, 14, 15 oder 16, **dadurch gekennzeichnet,** daß zwischen dem Differenzverstärker (DV) und dem Regelverstärker (RV) ein erster Widerstand (R1) liegt, daß zwischen dem Differenzverstärker (DV) und dem einen Eingang des Vergleichers (VL) eine Reihenschaltung aus dem ersten und einem zweiten Widerstand (R1, R2) liegt, daß der eine Eingang des Vergleichers (VL) über eine Kapazität (C1) auf Bezugspotential liegt und daß der eine Anschluß des Stellgliedes (SG), das als Spule ausgeführt ist, mit dem Ausgang des Regelverstärkers (RV) verbunden ist und der andere Anschluß auf Bezugspotential liegt.

## Claims

1. Method for the compensation of off-set voltages in a focusing control loop by means of which a light beam of a light source is focused on a record carrier, and/or in a tracking control loop by means of which the light beam is guided onto the data tracks of the record carrier, wherein the light beam is reflected from the record carrier onto a photo-detector having several photo-diodes (A, B, C, D, E, F) from whose output voltages the focusing error and/or tracking error signal are generated by formation of a difference, characterised in that, with closed control loop, the focusing error and/or tracking error signal is compared with a predefined reference value (UR) and that a compensating value is supplied to the control member (SG) of the focusing and/or tracking control loop which is varied until such time as the focusing error and/or tracking error signal is equal to the reference value (UR) and which is maintained upon equality of the focusing error and/or tracking error signal with the reference value (UR).

**2.** Method according to Claim 1, characterised in that, before the comparison of the focusing error and/or tracking error signal, in a first method step with open or switched-off control loop and with uniform illumination of the photo-diodes (A, B, C, D, and/or E, F), a first compensating value is added to the focusing error and/or tracking error signal and varied until such time as the sum is equal to a first reference value, that upon equality of the sum with the first reference value (UR) the first compensating value is maintained.

**3.** Method according to Claim 2, characterised in that, the first and second reference values are selected to be equally great.

**4.** Method according to Claim 2 or 3, characterised in that, in the production of the focusing and/or tracking control loop, a third method step follows the first and second method steps, that in the third method step the first compensating value established in-the first method step and the second compensating value established in the second method step are maintained, that the light beam is focused exactly on the record carrier by means of a measuring instrument and that thereafter the reference value is corrected.

**5.** Method according to Claim 1, characterised in that, before the comparison of the focusing error and/or tracking error signal, in a first method step with open or switched-off control loop and with uniform illumination of the photo-diodes, the focusing error and/or tracking error signal is stored as reference value.

**6.** Method according to Claim 5, characterised in that, in the production of the control loop in the first method step the light beam is focused exactly- on the record carrier and the exact focusing is checked by means of a measuring device.

**7.** Method according to Claim 4 or 6, characterised in that, a microscope is provided as the measuring device for the checking of the exact focusing.

**8.** Method according to Claim 4 or 6, characterised in that, for the checking of the exact focusing of the light beam on the record carrier, the minimum jitter in the HF signal is determined by means of a test record carrier.

**9.** Method according to Claim 2, 3, 4 or 5, characterised in that, for the achievement of an equal illumination of the photo-diodes (A, B, C, D, and/or E, F), the light intensity is selected as zero.

**10.** Method according to Claim 9, characterised in that, the photo-diodes (A, B, C, D, and/or E, F) are shielded by a blind from the light source.

**11.** Method according to Claim 9, characterised in that, the light source is switched-off.

**12.** Circuit arrangement for carrying out the method according to Claim 1, characterised in that, a voltage +U is applied to the interconnected cathodes of the photo-diodes (A, B, C, D) of the photo-detector, that the anodes of each second photo-diode (A and C, B and D) are connected together and to a respective input of a differential amplifier (DV) whose output is connected to the input of a servo amplifier (RV) and to the one input of a comparator (VL), that a reference voltage (UR) is applied to the other input of the comparator (VL), that the output of the comparator (VL) is connected to the input (E1) of a microprocessor (MP) whose output (A1) is connected to the input of a digital-to-analogue converter (DA1), that the output of the servo amplifier (RV) is connected to the output of the digital-to-analogue converter (DA1) and to the control member (SG), that the microprocessor (MP) supplies a compensating value to the control member (SG) of the focusing and/or tracking control loop which it alters until such time as the focusing error and/or tracking error signals are equal to the reference value (UR), and which it maintains upon equality of the focusing error and/or tracking error signals with the reference value (UR).

**13.** Circuit arrangement for carrying out the method according to Claim 2, characterised in that, a voltage +U is applied to the interconnected cathodes of the photo-diodes (A, B, C, D) of the photo-detector, that the anodes of each second photo-diode (A and C, B and D) are connected together and to a respective input of a differential amplifier (DV) whose output is connected to the input of a servo amplifier (RV) and to the one input of a comparator (VL), that a reference voltage (UR) is applied to the other input of the comparator (VL), that the output of the comparator (VL) is connected to the input (E1) of a microprocessor (MP) whose first output (A1) is connected to the input of a first digital-to-analogue converter (DA1) and whose second output (A2) is connected to the input of a second digital-to-analogue converter (DA2), that the output of the servo amplifier (RV) is connected to the output of the first digital-to-analogue converter (DA1) and to the control member (SG), that the output of the second digital-to-analogue converter (DA2) is connected to the input of the servo amplifier (RV), that the microprocessor (MP) adds a first compensating value to the focusing error and/or tracking error signal and varies it until such time as the sum is equal to a first reference value, that upon equality of the sum with the first reference value (UR) the microprocessor (MP) maintains the first compensating value, that the microprocessor (MP) supplies a second compensating value to the control member (SG) of the focusing and/or tracking control loop and varies it until such time as the focusing and/or tracking error signal is equal to the second reference value (UR), and that it maintains the second reference value upon equality of the focusing error and/or tracking error signal with the reference value (UR).

14. Circuit arrangement for carrying out the method according to Claim 4 and 13, characterised in that, the other input of the comparator (VL) is connected to a controllable reference voltage source (UR) whose control input is connected to a third output (A3) of the microprocessor (MP).

15. Circuit arrangement for carrying out the method according to Claims 5, characterised in that, a voltape +U is applied to the interconnected cathodes of the photo-diodes (A, B, C, D) of the photo-detector, that the anodes of each second photo-diode (A and G, B and D) are connected together and to a respective input of a differential amplifier (DV) whose output is connected to the input of a servo amplifier (RV) and to the input of a comparator (VL), that the other input of the comparator (VL) is connected to a controllable reference voltage source (UR), that the output of the comparator (VL) is connected to the input (E1) of a microprocessor (MP) whose first output (A1) is connected to the input of a digital-to-analogue converter (DA1) and whose second output (A3) is connected to the control input of the adjustable reference voltage source (UR), that the output of the servo amplifier (RV) is connected to the output of the digital-to-analogue converter (DA1) and to the control member (SG), that the microprocessor (MP) supplies a compensating value to the control member of the control loop and varies it until such time as the the focusing and/or tracking error signal is equal to the stored reference value, and that the microprocessor (MP) maintains the reference value upon equality of the focusing and/or tracking error signal with the stored reference value.

16. Circuit arrangement according to Claim 14 or 15, characterised in that, the controllable reference voltage source, (UR) is formed as a digital-analogue-converter.

17. Circuit arrangement according to Claim 12, 13, 14, 15 or 16, characterised in that, a first resistor (R1) is located between the differential amplifier (DV) and the servo amplifier (RV), that a series circuit consisting of the first and a second resistor (R1, R2) is located between the differential amplifier (DV) and the one input of the comparator (VL), that the one input of the comparator (VL) is attached to reference potential via a capacitor (C1) and that the one terminal of the control member (SG) which is formed as a coil is connected to the output of the servo amplifier (RV) and the other terminal is at reference potential.

## Revendications

1. Procédé pour la compensation de tensions offset dans un circuit de réglage de foyer au moyen duquel un faisceau lumineux d'une source de lumière est focalisé sur un support d'enregistrement et/ou dans un circuit de réglage de piste au moyen duquel le faisceau lumineux est guidé sur les pistes de données du support d'enregistrement, le faisceau lumineux étant réfléchi par le support d'enregistrement sur un photodétecteur avec plusieurs photodiodes (A, B, C, D, E, F), le signal d'erreur de foyer et/ou le signal d'erreur de piste étant généré à partir de leurs tensions de sortie en formant la différence, **caractérisé en ce** que, le circut de réglage étant fermé, le signal d'erreur de foyer et/ou le signal d'erreur de piste est comparé à une grandeur de référence qui peut être prédéterminé (UR) et qu'une grandeur de compensation est amenée au composan de réglage (SG) du circuit de réglage de foyer et/ou au circuit de réglage de piste, grandeur de compensation qui est variée jusqu'à ce que le signal d'erreur de foyer et/ou le signal d'erreur de piste coïncide avec la grandeur de référence (UR) et qui est conservée lorsque le signal d'erreur de foyer et/ou le signal d'erreur de piste coïncide avec la grandeur de référence (UR).

2. Procédé selon la revendication 1, **caractérisé en ce** qu'une première grandeur de compensation est ajoutée au signal d'erreur de foyer et/ou au signal d'erreur de piste avant la comparaison du signal d'erreur de foyer et/ou du signal d'erreur de piste dans un premier pas du procédé, le circuit de réglage étant ouvert ou hors circuit et l'illumination des photodiodes (A, B, C, D et/ou E, F) étant uniforme, et qu'elle est variée jusqu'à ce que la somme coïncide avec une première grandeur de référence (UR) et que, si la somme coïncide avec la première grandeur de référence (UR), la première grandeur de compensation est conservée.

3. Procédé selon la revendication 2, **caractérisé en ce** que la première et la seconde grandeurs de référence sont choisies de même grandeur.

4. Procédé selon la revendication 2 ou 3, **caractérisé en ce** que, lors de la production du circuit de réglage de foyer et/ou de pistes, un troisième pas de procédé suit le premier et le second pas de procédé, que, dans le troisième pas de procédé, la première grandeur de compensation déterminée lors du premier pas du procédé et la seconde grandeur de compensation déterminée lors du second pas du procédé sont conservées, que le faisceau lumineux est focalisé exactement sur la support d'enregistrement au moyen d'un appareil de mesure et que la grandeur de référence est ensuite corrigée.

5. Procédé selon la revendication 1, **caractérisé en ce** que le signal d'erreur de foyer et/ou le signal d'erreur de piste est mémorisé comme grandeur de référence avant la comparaison du signal d'erreur de foyer et/ou du signal d'erreur de piste dans un premier pas de procédé, le circuit de réglage étant ouvert ou hors circuit et l'illumination des photodiodes étant uniforme.

6. Procédé selon la revendication 5, **caractérisé en ce** que, lors de la production du circuit de réglage, le faisceau lumineux est focalisé exactement sur le support d'enregistrement dans un premier pas du procédé et que la focalisation exacte est contrôlée à l'aide d'un appareil de mesure.

7. Procédé selon (a revendication 4 ou 6, **caractérisé en ce** qu'un microscope est prévu comme appareil de mesure pour contrôler la focalisation exacte.

8. Procédé selon la revendication 4 ou 6, **caractérisé en ce** que le minimum d'instabilité dans le signal haute fréquence est déterminé au moyen d'un support d'enregistrement d'essai pour contrôler la focalisation exacte du faisceau lumineux sur le support d'enregistrement.

9. Procédé selon la revendication 2, 3, 4 ou 5, **caractérisé en ce** que la luminance est choisie comme étant zéro pour obtenir une illumination uniforme des photodiodes (A, B, C, D et/ou E, F).

10. Procédé selon la revendication 9, **caractérisé en ce** que les photodiodes (A, B, C, D et/ou E, F) sont protégées de la source de lumière par un écran.

11. Procédé selon la revendication 9, **caractérisé en ce** que la source de lumière est mise hors circuit.

12. Dispositif de circuit pour réaliser le procédé selon la revendication 1, **caractérisé en ce** qu'une tension +U est appliquée aux cathodes reliées l'une à l'autre des photodiodes (A, B, C, D) du photodétecteur, que les anodes de deux photodiodes respectives (A et C, B et D) sont reliées l'une à l'autre et à une entrée d'un amplificateur différenciateur (DV) chaque dont la sortie est reliée à l'entrée d'un amplificateur de réglage (RV) et à l'une des entrées d'un comparateur (VL), qu'une tension de référence (UR) est appliquée à l'autre du comparateur (VL), que la sortie du comparateur (VL) est reliée à l'entrée (E1) d'un microprocesseur (MP) dont la sortie (A1) est reliée à l'entrée d'un convertisseur numérique-analogique (DA1), que la sortie de l'amplificateur de réglage (RV) est reliée à la sortie du convertisseur numérique-analogique (DA1) et au composant de réglage (SG), que le microprocesseur (MP) amine au composant de réglage (SG) du circuit de réglage de foyer et/ou au circuit de réglage de piste une grandeur de compensation qu'il modifie jusqu'à ce que le signal d'erreur de foyer et/ou le signal d'erreur de piste coïncide avec la grandeur de référence (UR) et qu'il conserve, lorsque le signal d'erreur de foyer et/ou le signal d'erreur de piste coïncide avec la grandeur de référence (UR).

13. Dispositif de circuit pour réaliser le procédé selon la revendication 2, **caractérisé en ce** qu'une tension +U est appliquée aux cathodes reliées l'une à l'autre des photodiodes (A, B, C, D) du photodétecteur, que les anodes de deux photodiodes respectives (A et C, B et D) sont reliées l'une à l'autre et à une entrée d'un amplificateur différenciateur (DV) chaque dont la sortie est reliée à l'entrée d'un amplificateur de réglage (RV) et à l'une des entrées d'un comparateur (VL), qu'une tension de référence (UR) est appliquée à l'autre entrée du comparateur (VL), que la sortie du comparateur (VL) est reliée à l'entrée (E1) d'un microprocesseur (MP) dont la première sortie (A1) est reliée à l'entrée d'un premier convertisseur numérique-analogique (DA1) et dont la seconde sortie (A2) est reliée à l'entrée d'un second convertisseur numérique-analogique (DA2), que la sortie de l'amplificateur de réglage (RV) est reliée à la sortie du premier convertisseur numérique-analogique (DA1) et au composant de réglage (SG), que la sortie du second convertisseur numérique-analogique (DA2) est reliée à l'entrée de l'amplificateur de réglage (RV), que le microprocesseur (MP) ajoute au signal d'erreur de foyer et/ou au signal d'erreur de piste une première grandeur de compensation et qu'il la modifie jusqu'à ce que la somme coïncide avec une première grandeur de référence, que, lorsque la somme coïncide avec la première grandeur de référence (UR), le microprocesseur (MP) conserve la première grandeur de compensation, que le microprocesseur (MP) amène une seconde grandeur de compensation au composant de réglage (SG) du circuit de réglage de signal de foyer et/ou au circuit de réglage de piste et qu'il la modifie jusqu'à ce que le signal d'erreur de foyer et/ou le signal d'erreur de piste coïncide avec la seconde grandeur de référence (UR) et qu'il conserve la seconde grandeur de compensation, lorsque le signal d'erreur de foyer et/ou le signal d'erreur de piste coïncide.

14. Dispositif de circuit pour réaliser le procédé selon les revendications 4 et 13, **caractérisé en ce** que l'autre entrée du comparateur (VL) est reliée à une source de tension de référence qui peut être commandée (UR) dont l'entrée de commande est reliée à la troisième sortie (A3) du microprocesseur (MP).

15. Dispositif de circuit pour réaliser le procédé selon la revendication 5, **caractérisé en ce** qu'une tension +U est appliquée aux cathodes reliées l'une à l'autre des photodiodes (A, B, C, D) du photodétecteur, que les anodes de deux photodiodes respectives (A et C, B et D) sont reliées l'une à l'autre et à une entrée d'un amplificateur différenciateur (DV) chaque dont la sortie est reliée à l'entrée d'un amplificateur de réglage (RV) et à l'entrée d'un comparateur (VL), que l'autre entrée du comparateur (VL) est reliée à une source de tension de référence qui peut être commandée (UR), que la sortie du comparateur (VL) est reliée à l'entrée (E1) d'un microprocesseur (MP) dont la première sortie (A1) est reliée à l'entrée d'un convertisseur numérique-analogique (DA1) et dont la seconde sortie (A3) est reliée à l'entrée de commande de la source de tension de référence qui peut être commandée (UR), que la sortie de l'amplificateur de réglage (RV) est reliée à la sortie du convertisseur numérique-analogique (DA1) et au composant de réglage (SG), que le microprocesseur (MP) amène au composant de réglage (SG) du circuit de réglage une grandeur de compensation et qu'il la modifie jusqu'à ce que le signal d'erreur de foyer et/ou le signal d'erreur de piste coïncide avec la grandeur de référence mémorisée et que le microprocesseur (MP) conserve la grandeur de compensation, lorsque le signal d'erreur de foyer et/ou le signal d'erreur de piste coïncide avec la grandeur de référence mémorisée.

16. Dispositif de circuit selon la revendication 14 ou 15, caractérisé en ce que la source de tension de référence qui peut être commandée (UR) est conçue comme convertisseur numérique-analogique.

17. Dispositif de circuit selon la revendication 12, 13, 14, 15 ou 16, **caractérsé en ce** qu'une première résistance (R1) se trouve entre l'amplificateur différenciateur (DV) et l'amplificateur de réglage (RV), qu'un montage en série composé d'une première et d'une seconde résistance (R1, R2) se trouve entre l'amplificateur différenciateur (DV) et l'une des entrées du comparateur (VL), que l'une des entrées du comparateur (VL) se trouve sur le potentiel de référence par un condensateur (C1) et que la première connexion du composant de réglage (SG), qui est conçue comme bobine, est reliée à la sortie de l'amplificateur de réglage (RV) et que l'autre connexion se trouve sur le potentiel de référence.

a

$$HF = AS + BS + CS + DS$$

$$FE = (AS + CS) - (BS + DS) = 0$$

$$TE = ES - FS = 0$$

b

$$FE = (AS + CS) - (BS + DS) < 0$$

$$TE = ES - FS = 0$$

c

$$FE = (AS + CS) - (BS + DS) > 0$$

$$TE = ES - FS = 0$$

d

$$FE = (AS + CS) - (BS + DS) = 0$$

$$TE = ES - FS < 0$$

e

$$FE = (AS + CS) - (BS + DS) = 0$$

$$TE = ES - FS > 0$$

Fig. 1

Figur 2

Figur 3

14

Figur 4

Figur 5